# EUROPEAN PATENT SPECIFICATION

(11) **EP 1 686 559 B1**
(45) Date of publication and mention of the grant of the patent: **30.10.2013**
(21) Application number: 06250446.9
(22) Date of filing: 26.01.2006
(51) Int. Cl.: G09G 3/34, G09G 3/22, F21L 4/00

(54) **Liquid crystal display device and electronic apparatus**
Flüssigkristallanzeige und elektronische Vorrichtung
Dispositif d'affichage à cristaux liquides et appareil électronique

(30) Priority: 26.01.2005 JP 2005018696
(43) Date of publication of application: 02.08.2006
(73) Proprietor: Brother Kogyo Kabushiki Kaisha, Nagoya-shi, Aichi-ken 467-8561 (JP)
(72) Inventor: Sunda, Fumihiro c/o Technology Plan. & IP Dept., Nagoya-shi Aichi-ken 467-8562 (JP)
(74) Representative: Smith, Samuel Leonard

(56) References cited:
- US-A1- 2001 013 854
- US-A1- 2004 252 096
- US-B1- 6 488 390
- US-B1- 6 724 158

## Description

### CROSS REFERENCE TO RELATED APPLICATION

This application claims priority from Japanese Patent Application No. 2005-018696, filed on January 26, 2005, the entire subject matter of which is incorporated herein by reference.

### TECHNICAL FIELD

Aspects of the present invention relate to a liquid crystal display device which is equipped with a liquid crystal screen and a backlight for applying light to the liquid crystal screen from its back side, as well as to an electronic apparatus incorporating it. The liquid crystal display device forms an image on the liquid crystal screen and displays, on the liquid crystal screen, the image formed on the liquid crystal screen by lighting the backlight and there by applying light to the liquid crystal screen.

### BACKGROUND

Conventionally, in general, cordless telephones (e.g., portable handsets) and cell phones incorporate a liquid crystal display device and are configured so as to display various kinds of information such as a telephone number and a call state on the liquid crystal screen.

More specifically, liquid crystal display devices incorporated in such telephones are configured in such a manner that an image is formed on the liquid crystal screen and the image formed on the liquid crystal screen is displayed thereon by lighting a backlight disposed behind the liquid crystal screen and thereby applying light to the liquid crystal screen (e.g., refer to JP-A-2003-100473).

US 2001/0013854 discloses a liquid crystal display device according to the pre-characterizing section of claim 1.

US 2004/0252096 discloses a backlight power controller chip for controlling the backlighting of a dual panel display of a hand held apparatus.

US 6,724,158 discloses a power linearization technique for controlling the luminance of light emitting display devices.

US 6,488,390 discloses a LED flashlight.

### SUMMARY

Incidentally, in such telephones, it would be possible to use light that is emitted from the backlight and passes through the liquid crystal screen as illumination light for illuminating the outside.

However, since liquid crystal display devices are usually configured in such a manner that light emitted from the backlight is used only for display of an image, the quantity of light that is emitted from the backlight and passes through the liquid crystal screen is insufficient for use as illumination light for illuminating the outside.

One measure to solve the above problem would be to increase the emission light quantity of the backlight. However, this would cause a state that is equivalent to a state that the contrast of the liquid crystal screen is lowered, as a result of which an image displayed on the liquid crystal screen would be made difficult to see.

In view of the above, aspects of the present invention is provide a liquid crystal display device in which light emitted from a backlight can also be used as illumination light for illuminating the outside without causing a problem that an image displayed on the liquid crystal screen is made difficult to see, as well as an electronic apparatus incorporating it.

According to an aspect of the invention, there is provided a liquid crystal display device comprising: a liquid crystal screen; a backlight that is arranged to apply light to the liquid crystal screen; and a unit arranged to increase the amount of light transmitted by the liquid crystal display device by increasing a quantity of light coming from the backlight and passing through the liquid crystal screen characterized in that the unit arranged to increase the amount of light transmitted by the liquid crystal display device is adapted to increase a quantity of light coming from the backlight and passing through the liquid crystal screen from a quantity of light coming from the backlight in a display mode, in which the light coming from the backlight is used for display of an image, to a quantity of light coming from the backlight in an illumination mode, in which the light coming from the backlight and passing through the liquid crystal screen is for use as illumination light for illuminating outside, a prescribed time after the time when a transition request for a transition from the display mode to the illumination mode is received by said unit for increasing the amount of light transmitted by the liquid crystal display device wherein the unit arranged to increase the amount of light transmitted by the liquid crystal display device is arranged to set an emission light quantity of the backlight larger than that in the display mode, and wherein the unit arranged to increase the amount of light transmitted by the liquid crystal display device is for setting contrast of the liquid crystal screen in the illumination mode lower than that in the display mode.

In this liquid crystal display device, when a request for a transition to the illumination mode is received, the transmission light quantity increasing unit increases the quantity of the part, passing through the liquid crystal screen, of the light coming from the backlight from that in the display mode (i.e., increases the transmission light quantity).

That is, in this liquid crystal display device, the transmission light quantity is increased only in the illumination mode. Therefore, the light emitted from the backlight can be used as illumination light for illuminating the outside without causing a problem that an image displayed on the liquid crystal screen is made difficult to see in the display mode.

This liquid crystal display device may be configured in such a manner that the backlight is lit all the time or in such a manner that it is lit only for a prescribed time.

This liquid crystal display device may be configured in such a manner that the light source of the backlight is disposed behind the liquid crystal screen or in such a manner that the light source is disposed in a portion other than the back side of the liquid crystal screen and light emitted from the light source is guided to behind the liquid crystal screen and then shines on it.

### BRIEF DESCRIPTION OF THE DRAWINGS

Illustrative aspects of the invention may be more readily described with reference to the accompanying drawings:
Fig. 1 is a block diagram showing the configuration of a telephone according to an aspect of the present invention;
Fig. 2 is a block diagram showing the configuration of a liquid crystal display unit;
Fig. 3 is a flowchart of a starting process which is executed by a CPU;
Fig. 4 is a flowchart of a display mode process which is executed by the CPU;
Fig. 5 is a flowchart of an illumination mode process which is executed by the CPU; and
Figs. 6A to 6C illustrate states of a liquid crystal screen in the display mode and the illumination mode.

### DETAILED DESCRIPTION

An aspect of the present invention will be hereinafter described with reference to the drawings.

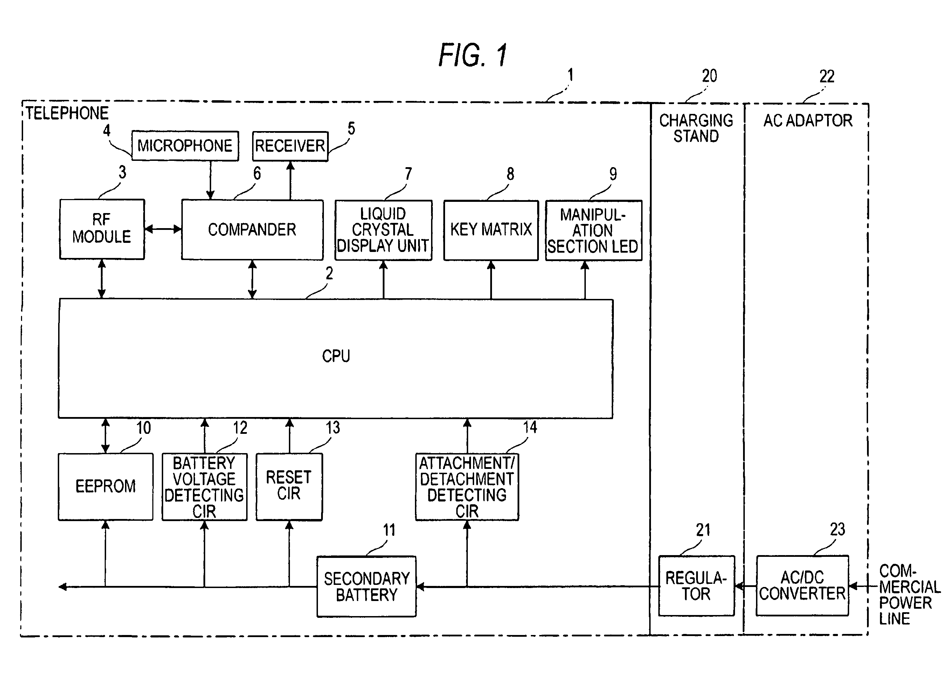

Fig. 1 is a block diagram showing the configuration of a telephone 1 according to an aspect of the invention. The telephone 1 is a cordless telephone (portable handset) that is provided in a known multi-function machine (MFP) in which a scanner function, a printer function, a facsimile function, a telephone function, etc., are integrated together.

As shown in Fig. 1, the telephone 1 is equipped with a CPU 2 for controlling various devices incorporated in the telephone 1 in a unified manner, an RF module 3 for transmitting and receiving radio waves, a microphone 4 for converting a voice that is input from outside the telephone 1 into an audio signal, a receiver 5 for converting an audio signal into a voice and outputting it to the outside of the telephone 1, and a compander 6 for compressing and expanding the dynamic range of an input signal.

The telephone 1 is also equipped with a liquid crystal display unit 7 for displaying an image, a key matrix 8 consisting of various keys to be used for manipulating the telephone 1 externally, manipulation section LEDs 9 for lighting particular keys of the key matrix 8, and an EEPROM 10 as a nonvolatile memory whose storage content is rewritable.

The telephone 1 is also equipped with a secondary battery 11 for supplying power to the various devices incorporated in the telephone 1, a battery voltage detecting circuit 12 for detecting an output voltage Vcc of the secondary battery 11, a reset circuit 13 for resetting the CPU 2 in accordance with the output voltage Vcc of the secondary battery 11, and an attachment/detachment detecting circuit 14 for detecting attachment or detachment of an external charging stand 20 of the telephone 1 for charging the secondary battery 11.

More specifically, the CPU 2 is not configured as a mere CPU and incorporates a ROM (not shown) for storing programs of various kinds of processing to be performed by the CPU 2, a RAM (not shown) to be used as a storage area in performing any of the various kinds of processing, input/output ports through which the CPU 2 is connected to the various devices, a timer (not shown) for time measurement, and other elements.

The RF module 3 sets a transmission frequency or a reception frequency of radio waves on the basis of frequency setting data that is input from the CPU 2, and superimposes an input signal from the compander 6 on radio waves and transmits the radio waves to the outside of the telephone 1. On the other hand, the RF module 3 extracts a signal (audio signal or data signal) that is superimposed on radio waves received from outside the telephone 1 and outputs the signal to the compander 6. Further, the RF module 3 outputs, to the CPU 2, a radio wave intensity signal (RSSI signal) indicating the intensity of received radio waves and a carrier sense signal indicating that radio waves have been received from the base unit.

The compander 6 compresses the dynamic range of an audio signal that is input from the microphone 4 according to a control signal that is input from the CPU 2, and outputs the resulting audio signal to the RF module 3. On the other hand, the compander 6 expands the dynamic range of an audio signal that is input from the RF module 3 and outputs the resulting audio signal to the receiver 5, and outputs, to the CPU 2, as it is, a data signal that is input from the RF module 3.

When various keys are depressed, the key matrix 8 outputs depression signals indicating the depressed keys to the CPU 2.

Based on a lighting signal that is input from the CPU 2, the manipulation section LEDs 9 light a particular key of the key matrix 8 (in this embodiment, an outside line key (not shown) to be depressed to connect the telephone 1 to an outside line, an extension key (not shown) to be depressed to connect the telephone 1 to an extension, a call end key (not shown) to be depressed to cancel a connection between the telephone 1 and an outside line or an extension, or a function key (not shown) to be depressed to make various settings of the telephone 1).

Whereas the EEPROM 10 stores various setting values of the telephone 1, it outputs the various setting values to the CPU 2 in response to a request from the CPU 2 or rewrites the various setting values.

The secondary battery 11 is configured so as to be able to be attached to and detached from the telephone 1. If the telephone 1 is placed on the charging stand 20 with the secondary battery 11 attached thereto, power is supplied from an external commercial power line to the secondary battery 11 via an AC/DC converter 23 of an AC adaptor 22 that is connected to the external commercial power line and a regulator 21 of the charging stand 20.

The battery voltage detecting circuit 12 detects an output voltage Vcc of the secondary battery 11, and outputs a voltage value signal indicating the value of the output voltage Vcc to the CPU 2.

The reset circuit 13 detects an output voltage Vcc of the secondary battery 11, and outputs, to the CPU 2, a reset signal for resetting the CPU 2 when the output voltage Vcc becomes lower than a lowest voltage Vlow that assures normal operation of the CPU 2.

The attachment/detachment detecting circuit 14 detects a supply voltage Vs that is supplied from the regulator 21 to the secondary battery 11, and outputs, to the CPU 2, a detachment signal indicating that the charging stand 20 has been detached from the telephone 1 when the supply voltage Vs becomes 0 V.

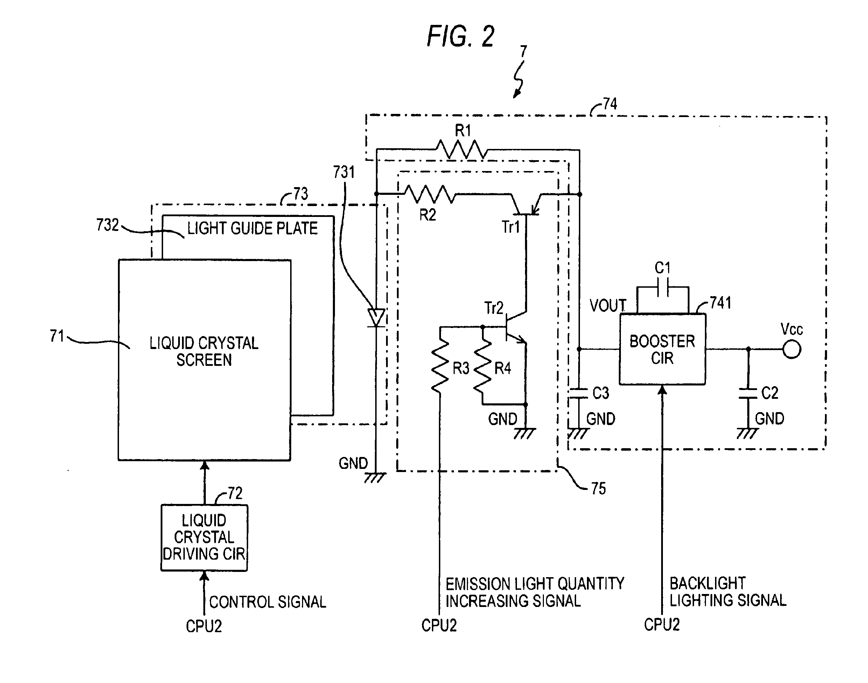

The liquid crystal display unit 7 is configured as shown in Fig. 2. Fig. 2 is a block diagram showing the configuration of the liquid crystal display unit 7.

As shown in Fig. 2, the liquid crystal unit 7 is composed of a liquid crystal screen 71, a liquid crystal driving circuit 72 for forming an image on the liquid crystal screen 71, a backlight 73 applying light to the liquid crystal screen 71 from its back side, a backlight driving circuit 74 for lighting the backlight 73, and an emission light quantity increasing circuit 75 for increasing the emission light quantity of the backlight 73.

More specifically, as is well known, the liquid crystal screen 71 is configured in such a manner that polarizing plates (not shown) are stuck to it and a liquid crystal material (not shown) is sealed between two glass plates on which electrodes (pixel electrodes) are formed on a pixel-by-pixel basis. It is noted that, in this embodiment, the liquid crystal screen 71 is not provided with color filters and displays a monochrome image.

The liquid crystal driving circuit 72 forms an image on the liquid crystal screen 71 by applying voltages to the pixel electrode's of the liquid crystal screen 71 according to control signals that are input from the CPU 2 and thereby setting polarization angles for the respective pixels of the liquid crystal screen 71.

The backlight 73 is composed of an LED 731 as a light source of the backlight 73 which is disposed in a portion other than the back side of the liquid crystal screen 71 (in this embodiment, beside a light guide plate 732) and a light guide plate 732 for reflecting, to behind the liquid crystal screen 71, light emitted from the LED 731 and light that shines on and passes through the liquid crystal screen 71 from outside the telephone 1. In the backlight 73, the cathode of the LED 731 is connected to the ground line (GND) of the secondary battery 11. In this embodiment, the LED 731 is a white LED which emits white light.

The backlight driving circuit 74 is composed of a booster circuit 741 which operates according to a backlight lighting signal that is input from the CPU 2 and boosts the output voltage Vcc of the secondary battery 11 and a resistor R1 which is connected to the output side of the booster circuit 741 and the anode of the LED 731 of the backlight 73 and restricts the current that flows from the booster circuit 741 into the LED 731. In this embodiment, the booster circuit 741 is of a charge pump type and is configured so as to boost the output voltage Vcc of the secondary battery 11 using one or plural capacitors C1. To smooth out the output voltage Vcc of the secondary battery 11 that is input to the booster circuit 741, a capacitor C2 is connected to the booster circuit 741 between the output voltage Vcc input side and GND of the secondary battery 11. On the other hand, to smooth out the output voltage Vout of the booster circuit 741, a capacitor C3 is connected to the booster circuit 741 between the output voltage Vout output side and GND of the secondary battery 11.

The emission light quantity increasing circuit 75 is composed of a PNP transistor Tr1 whose emitter is connected to the output side of the booster circuit 741 of the backlight driving circuit 74, a resistor R2 and an NPN transistor Tr2. The resistor R2 is connected to the collector of the transistor Tr1 and the anode of the LED 731 of the backlight 73 and restricts the current that flows from the booster circuit 741 to the LED 731 via the transistor Tr1. The collector, the emitter, and the base of the transistor Tr2 are connected to the base of the transistor Tr1, GND of the secondary battery 11, and the CPU 2, respectively, and the transistor Tr2 is turned on by an emission light quantity increasing signal that is input from the CPU 2 and thereby turns on the transistor Tr1. In this embodiment, a resistor R3 is provided between the CPU 2 and the transistor Tr2 to restrict the current that flows from the CPU 2 into the base of the transistor Tr2. And a resistor R4 is provided between the base and emitter of the transistor Tr2 so that the transistor Tr2 can make an on-to-off transition immediately by releasing charge stored between the base and emitter of the transistor Tr2 to GND of the secondary battery 11 when the transistor Tr2 is turned off.

That is, in the liquid crystal display unit 7, the liquid crystal driving circuit 72 forms an image on the liquid crystal screen 71 according to control signals that are input from the CPU 2. The booster circuit 741 operates according to a backlight lighting signal that is supplied from the CPU 2, a current flows from the booster circuit 741 to the LED 731 of the backlight 73, and the LED 731 is turned on. The backlight 73 applies light to the liquid crystal screen 71, whereby an image formed on the liquid crystal screen 71 is displayed thereon. Further, the transistors Tr1 and Tr2 are turned on by an emission light quantity increasing signal that is input from the CPU 2 and the current flowing into the LED 731 is thereby increased. As a result, the emission light quantity of the LED 731 is increased and hence the emission light quantity of the backlight 73 is increased.

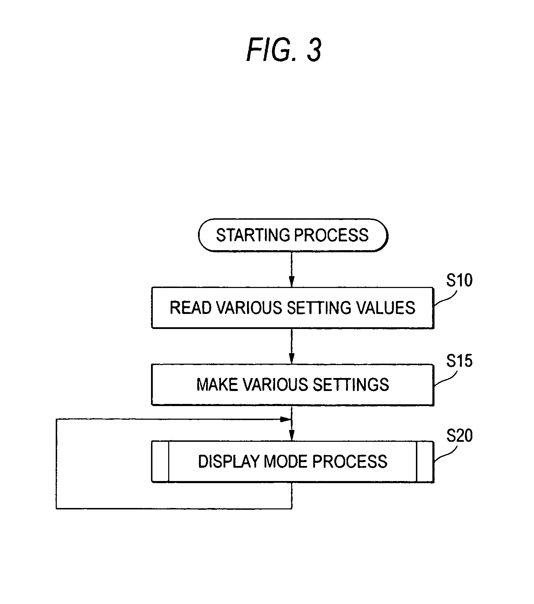

In the telephone 1 having the above configuration, when the secondary battery 11 is attached to it and the CPU 2 is started, the CPU 2 executes a starting process shown in Fig. 3. Fig. 3 is a flowchart of the starting process which is executed by the CPU 2.

As shown in Fig. 3, in the starting process, first, various setting values of the telephone 1 are read from the EEPROM 10 (S10). Various settings of the telephone 1 are made on the basis of the read-out various setting values (S15). More specifically, voltages to be applied to the respective pixel electrodes of the liquid crystal screen 71 are determined as one of the various settings on the basis of a contrast value of the liquid crystal screen 71 that is set in the EEPROM 10 in advance, and a corresponding control signal is output to the liquid crystal driving circuit 72. The voltages corresponding to the contrast value are thereby applied to the respective pixel electrodes. Each pixel of the liquid crystal screen 71 has a characteristic that the polarization angle is set in such a direction as to interrupt a larger'part of light coming from the backlight 73 as the voltage applied to the pixel electrode increases. As a result, the quantity of the part, passing through each pixel, of light coming from the backlight 73 decreases and the contrast of the liquid crystal screen 71 increases (i.e., the density of an image increases) as the voltage applied to the pixel electrode increases. In other words, Each pixel of the liquid crystal screen 71 has a characteristic that the polarization angle is set in such a direction as to transmit a larger part of light coming from the backlight 73 as the voltage applied to the pixel electrode decreases. As a result, the quantity of the part, passing through each pixel, of light coming from the backlight 73 increases and the contrast of the liquid crystal screen 71 lowers (i.e., the density of an image decreases) as the voltage applied to the pixel electrode decreases. There is a tendency that as the voltage applied to the pixel electrode increases, liquid crystal molecules in a non-image-forming portion (i.e., a white portion that should transmit light coming from the backlight 73) of each pixel of the liquid crystal screen 71 are influenced more by the voltage to cause a polarization angle and hence the entire screen becomes darker.

A display mode process as a process that should be executed in a display mode in which the light emitted from the backlight 73 is used for image display is executed repeatedly (S20).

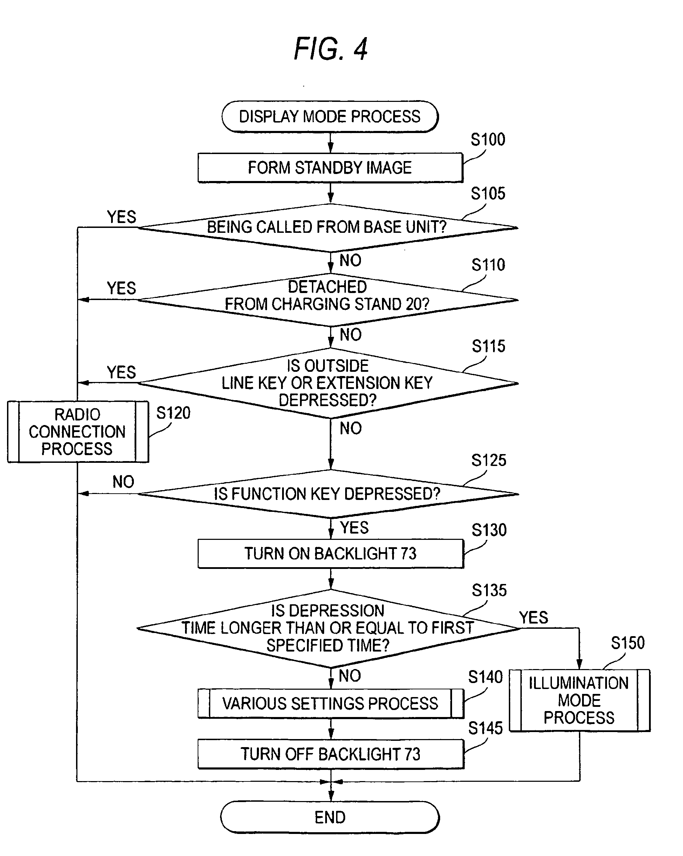

Fig. 4 is a flowchart of the display mode process (S20) which is executed by the CPU 2.

As shown in Fig. 4, in the display mode process, first, a control signal for causing the liquid crystal driving circuit 72 to form, on the liquid crystal screen 71, an image that should be formed thereon in a standby state of the telephone 1 is output to the liquid crystal driving circuit 72 and the standby image is thereby formed on the liquid crystal screen 71 (S100).

Then, it is judged whether or not the base unit is calling the telephone 1 (S105). More specifically, first, it is judged whether the voltage of the RSSI signal that is input from the RF module 3 is higher than or equal to a prescribed voltage and a carrier sense signal is being input from the RF module 3. If it is judged that the voltage of the RSSI signal is higher than or equal to the prescribed voltage and a carrier sense signal is being input, it is judged that the base unit is calling the telephone 1 with an additional condition that an ID indicated by a data signal that is input from the compander 6 (i.e., a data signal transmitted from the base unit) coincides with an ID of the telephone 1 that is set in the EEPROM 10 in advance.

When it is judged that the base unit is calling the telephone 1 (S105: yes), the process moves to step S120 (described later). On the other hand, when it is judged that the base unit is not calling the telephone 1 (S105: no), it is judged whether or not the telephone 1 is detached from the charging stand 20 (S110). More specifically, it is checked whether or not a detachment signal is being input from the attachment/detachment detecting circuit 14. It is judged that the telephone 1 is detached from the charging stand 20 only when a detachment signal is being input.

If it is judged that the telephone 1 is detached from the charging stand 20 (S110: yes), the process moves to step S120 (described later). On the other hand, when it is judged that the telephone 1 is not detached from the charging stand 20 (S110: no), it is judged whether or not the outside line key or the extension key is depressed (S115).

If it is judged that the outside line key or the extension key is depressed (S115: yes), a radio connection process for connecting the telephone 1 and the base unit by radio is executed (S120) and the display mode process is finished. In the radio connection process, control signals for causing the liquid crystal driving circuit 72 to form various images relating to communications with the base unit are output to the liquid crystal driving circuit 72 and the various images relating to communications with the base unit are thereby formed on the liquid crystal screen 71. And a backlight lighting signal is output to the booster circuit 741 for a prescribed time, whereby the backlight 73 is lit for the prescribed time and the various images relating to communications with the base unit are formed on the liquid crystal screen 71. On the other hand, A radio wave transmission frequency and reception frequency are set by outputting frequency setting data to the RF module 3 and a radio connection to the base unit is established at the thus-set transmission frequency and reception frequency (that is, an operator of the telephone 1 is thereby allowed to talk to the other person on an outside line or an extension). When the call end key is depressed, the radio connection to the base unit is canceled and the radio connection process is finished.

On the other hand, when it is judged that neither the outside line key nor the extension key is depressed (S115: no), it is judged whether or not the function key is depressed (S125). If it is judged that the function key is not depressed (S125: no), the display mode process is finished immediately.

On the other hand, when it is judged that the function key is depressed (S125: yes), a backlight lighting signal is output to the booster circuit 741 and the backlight 73 is thereby turned on (S130). The depression time is measured by the built-in timer until the depression of the function key is finished, and it is judged whether or not the depression time of the function key is longer than or equal to a first specified time (in this embodiment, 2 seconds) that was specified in advance (S135).

If it is judged that the depression time is shorter than the first specified time (S135: no), a process corresponding to the various settings (various settings process) is executed (S140). For example, a preset contrast changing process is executed. In the contrast changing process, the contrast value stored in the EEPROM 10 is written to a contrast value that is input by a key manipulation and a control signal corresponding to the input contrast value is output to the liquid crystal driving circuit 12. The contrast of the liquid crystal screen 71 is thereby changed. In practice, a contrast range in which the contrast can be set by a key manipulation is limited to such a range that an operator of the telephone 1 can visually recognize an image.

After completion of the various settings process, the output of the backlight lighting signal is stopped and the backlight 73 is thereby turned off (S145). Then, the display mode process is finished.

On the other hand, when it is judged at step S135 that the depression time is longer than or equal to the first specified time (S135: yes), an illumination mode process is started that should be executed in an illumination mode for using light emitted from the backlight 73 as illumination light for illuminating the outside (S150). Then, the display mode process is finished.

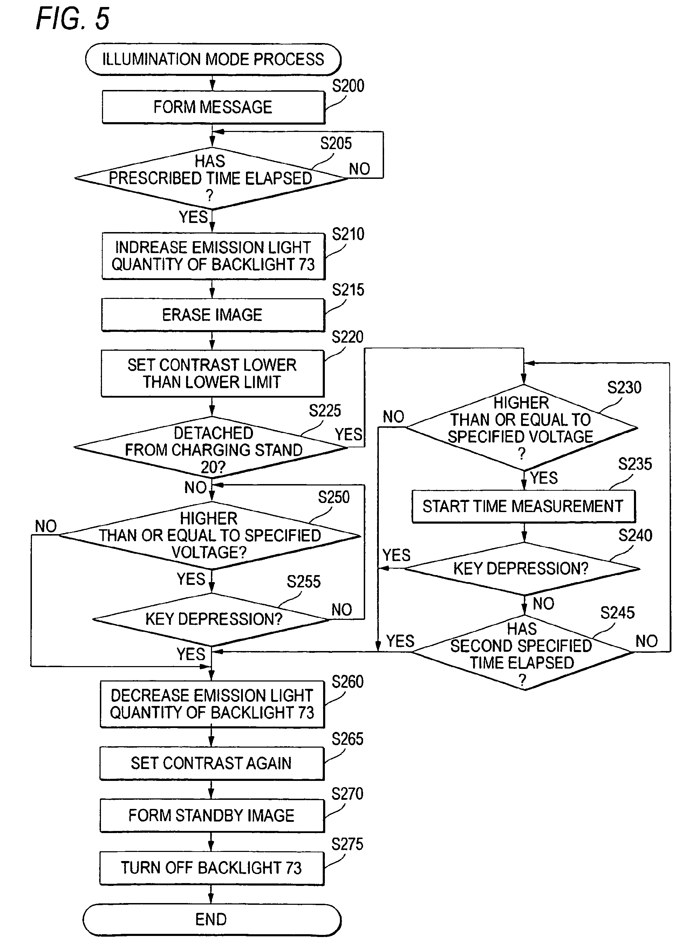

Fig. 5 is a flowchart of the illumination mode process (S150) which is executed by the CPU 2.

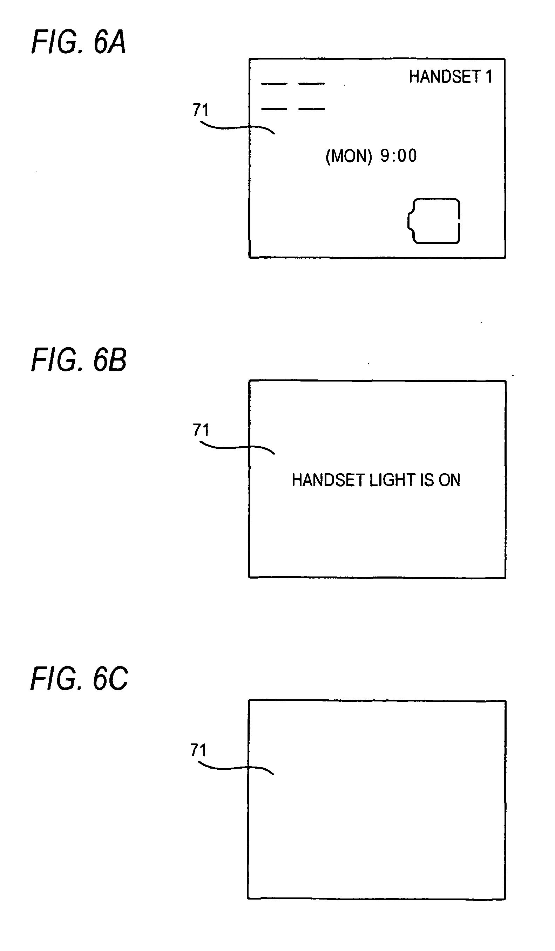

As shown in Fig. 5, in the illumination mode process, first, a control signal for causing the liquid crystal driving circuit 72 to form a message to the effect that the telephone 1 has made a transition to the illumination mode is output to the liquid crystal driving circuit 72 and the message is thereby formed on the liquid crystal screen 71 (S200). In this embodiment, a message "The handset light is on" is formed (see Fig. 6B).

Then, time is measured by the built-in timer and waiting is done until a prescribed time (in this embodiment, 3 seconds) elapses (S205). Then, an emission light quantity signal is output to the transistor Tr2 and the transistors Tr1 and Tr2 are thereby turned on. As a result, the emission light quantity of the backlight 73 is increased and the quantity of the part, passing through the liquid crystal screen 71, of light coming from the backlight 73 is increased (S210). Then, a control signal for causing the liquid crystal driving circuit 72 to erase the image being displayed on the liquid crystal screen 71 is output to the liquid crystal driving circuit 72 and the image is thereby erased from the liquid crystal screen 71. As a result, part of light coming from the backlight 73 is prevented from being interrupted because of the presence of the image and the transmitted part of light coming from the backlight 73 is increased further (S215; see Fig. 6C). Then, a control signal for setting the contrast of the liquid crystal screen 71 lower than the lower limit of the contrast range in which the contrast of the liquid crystal screen 71 can be set by a key manipulation is output to the liquid crystal driving circuit 72 and the contrast of the liquid crystal screen 71 is thereby set lower than the lower limit of the key-manipulation-settable contrast range. The transmitted part of light coming from the backlight 73 is thereby increased even further (S220). This is because, as described above, the liquid crystal screen 71 has the characteristic that the quantity of the part, passing through each pixel, of light coming from the backlight 73 increases when the contrast is set low. In this embodiment, the contrast is set to minimum contrast that can be set for the liquid crystal screen 71.

As in the above-described step S110, it is judged whether or not the telephone 1 is detached from the charging stand 20 (S225). If it is judged that the telephone 1 is detached from the charging stand 20 (S225: yes), it is judged whether the output voltage Vcc of the secondary battery 11 indicated by the voltage value signal that is input from the battery voltage detecting circuit 12 is higher than or equal to a specified voltage (in this embodiment, 2.3V) that was specified in advance (S230).

If it is judged that the output voltage Vcc is lower than the specified voltage (S230: no), the process moves to step S260 (described later). On the other hand, when it is judged that the output voltage Vcc is higher than the specified voltage (S230: yes), a time measurement with the built-in timer is started (S235). Then, it is judged whether or not any key of the key matrix 8 is depressed (S240). If it is judged that a certain key is depressed (S240: yes), the process moves to step S260 (described later). On the other hand, when it is judged that none of the keys are depressed (S240: no), it is judged whether or not the time measured by the built-in timer indicates that a second specified time (in this embodiment, 5 minutes) has elapsed (S245).

If it is judged that the second specified time has not elapsed yet (S245: no), the process returns to the above-described step S230. On the other hand, when it is judged that the second specified time has elapsed (S245: yes), the process moves to step S260 (described later).

On the other hand, when it is judged at step S225 that the charging stand 20 is not detached (S225: no), it is judged, as in the above-described step S230, whether the output voltage Vcc is higher than or equal to the specified voltage (S250). If it is judged that the output voltage Vcc is lower than the specified voltage (S250: no), the process moves to step S260 (described later).

On the other hand, when it is judged that the output voltage Vcc is higher than the specified voltage (S250: yes), it is judged, as in the above-described step S240, whether or not any key of the key matrix 8 is depressed (S255). If it is judged that none of the keys are depressed (S255: no), the process returns to the above-described step S250.

On the other hand, when it is judged that a certain key is depressed (S255: yes), the output of the emission light quantity increasing signal is stopped, whereby the transistors Tr1 and Tr2 are turned off and the emission light quantity of the backlight 73 is thereby reduced (S260). Then, the contrast value that is set in the EEPROM 10 is read and a corresponding control signal is output to the liquid crystal driving circuit 72, whereby the contrast of the liquid crystal screen 71 is set again (S265). Then, a control signal for causing the liquid crystal driving circuit 72 to form a standby image is output to the liquid crystal driving circuit 72 and the standby image is thereby formed on the liquid crystal screen 71 (S270). Then, the output of the backlight lighting signal is stopped and the backlight 73 is thereby turned off (S275). The illumination mode process is then finished.

As described above, in the telephone 1 according to this embodiment, when a request for a transition to the illumination mode in which the light emitted from the backlight 73 is used as illumination light is made by depressing the function key for the first specified time or more in a state that the telephone 1 is placed on the charging stand 20 in the display mode in which the light emitted from the backlight 73 is used for image display (see Fig. 6A), the message to the effect that a transition will be made to the illumination mode is displayed on the liquid crystal screen 71 (see Fig. 6B) . When the prescribed time has since elapsed, the emission light quantity of the backlight 73 is increased, the image erased from the liquid crystal screen 71, and the contrast of the liquid crystal screen 71 is set low (see Fig. 6C), whereby the quantity of the part, passing through the liquid crystal screen 71, of light coming from the backlight 73 is increased. Figs. 6A to 6C illustrate states of the liquid crystal screen 71 in the display mode and the illumination mode.

That is, in the telephone 1 according to this embodiment, the transmission light quantity is increased only in the illumination mode. Therefore, the light emitted from the backlight 73 can be used as illumination light for illuminating the outside without causing a problem that an image displayed on the liquid crystal screen 71 is made difficult to see in the display mode.

In the telephone 1 according to this embodiment, the illumination mode can be canceled by depressing a certain key in the illumination mode. Therefore, the illumination mode can be established only when illumination light is necessary, which prevents useless power consumption.

In the telephone 1 according to this embodiment, when the telephone 1 is placed on the charging stand 20 and a commercial power line is used as a power source, the illumination mode is maintained according to a request from an operator. If the telephone 1 is detached from the charging stand 20 (i.e., the secondary battery 11 is used as a power source), the illumination mode is canceled upon a lapse of the second specified time. This prevents an event that the illumination mode is maintained unduly and the power of the secondary battery 11 is thereby consumed uselessly.

In the telephone 1 according to this embodiment, the backlight 73 is turned off (i.e., lighting of the backlight 73 is prohibited) as soon as the output voltage Vcc of the secondary battery 11 is judged lower than the specified voltage. This prevents an event that the backlight 73 is lit though the remaining energy of the secondary battery 11 is low and its output voltage Vcc is low and the remaining energy of the secondary battery 11 is thereby used up.

The telephone 1 according to this embodiment is a cordless telephone and hence is portable. Therefore, the telephone 1 according to this embodiment can be used as a portable illumination device in the illumination mode and hence can be used as a highly convenient illumination device.

In the telephone 1 according to this embodiment, no transition is made to the illumination mode while it is connected to the base unit by radio (i.e., during a call) (see Fig. 4). This prevents an event that a transition is made to the illumination mode during a call and the power of the secondary battery 11 is consumed uselessly, resulting in shortening of the call-enabled time.

Further, in the telephone 1 according to this embodiment, the contrast of the liquid crystal screen 71 in the display mode can be set by a key manipulation. Therefore, an image can be made easier to see in the display mode by adjusting the contrast of the liquid crystal screen 71 in the display mode. In addition, in the illumination mode, the contrast of the liquid crystal screen 71 is set lower than the lower limit of the key-manipulation-settable contrast range. This makes it possible to further increase the transmission light quantity in the illumination mode.

In the embodiment, the contrast value in the illumination mode'is set at a value that is smaller than the settable range. However, the invention is not limited to such a case; the contrast value in the illumination mode may be set so as to increase the light quantity. The illumination mode may be canceled when a particular key is depressed.

In the embodiment, the illumination mode is canceled when the output voltage Vcc of the secondary battery 11 has become lower than the specified voltage, even in such a condition the illumination mode may be maintained in a state that the emission light quantity of the backlight 73 is decreased. With this configuration, the illumination mode can be maintained as long a time as possible while the power consumption is lowered.

In the embodiment, switching to the illumination mode is made in a state that the telephone 1 is placed on the charging stand 20 (S110: no in Fig. 4). However, the invention is not limited to such a case; the illumination mode process of Fig. 5 may be started when an instruction is received in the form of, for example, a manipulation that the function key is depressed for a prescribed time in a state that the telephone 1 is picked up from the charging stand 20. In this case, the illumination mode can be established in a movable state, which makes it possible to switch to the illumination mode at a desired time and a desired place.

In the embodiment, switching to the illumination mode is made by depressing the function key for the prescribed time. However, the invention is not limited to such a case; for example, switching to the illumination mode is made automatically at a prescribed time by, for example, setting a time of switching to the illumination mode in advance.

In the embodiment, the liquid crystal screen 71 and the backlight 73 function as a liquid crystal screen and a backlight, respectively.

In the embodiment, the liquid crystal driving circuit 72, the emission light quantity increasing circuit 75, step S135 of the display mode process and steps S210, S215, and S220 of the illumination mode process executed by the CPU 2 function as a transmission light quantity increasing unit.

In the embodiment, the liquid crystal driving circuit 72 and step S140 of the display mode process executed by the CPU 2 function as a contrast setting unit. Steps S240, S255, S260, S265, and S270 of the illumination mode process executed by the CPU 2 function as a first canceling unit. And steps S235, S245, S260, S265, and S270 of the illumination mode process executed by the CPU 2 function as a second canceling unit.

In the embodiment, steps S230 and S275 of the illumination mode process executed by the CPU 2 function as a lighting prohibiting unit. And steps S105, S110, and S115 of the display mode process executed by the CPU 2 function as an operation prohibiting unit.

The embodiment of the invention has been described above. However, it goes without saying that the invention is not limited to the embodiment at all and various modifications are possible without departing from the technical scope of the invention.

For example, although in the embodiment the CPU 2 is not set so as to light the backlight 73 all the time, the CPU 2 may be set so as to light the backlight 73 all the time.

Although in the embodiment the LED 731 is disposed beside the light guide plate 732, the LED 731 may be disposed behind the crystal screen 71.

Although in the embodiment the liquid crystal screen 71 is configured so as to display a monochrome image, it may be equipped with color filters so as to be able to display a color image.

Although in the embodiment the LED 731 is a white LED, it may be an LED having an emission color other than white.

Although in the embodiment the emission light quantity of the backlight 73 is increased by increasing the current flowing into the LED 731, the emission light quantity of the backlight 73 may be increased by providing the backlight 73 with plural LEDs 731 and increasing the number of lighted LEDs 731 in the illumination mode from that in the display mode.

Although in the embodiment the invention is applied to the portable handset of the composite machine, the invention may be applied to portable handsets of other kinds of communication apparatus (e.g., a facsimile machine) or cell phones. The invention may also be applied to portable electronic apparatus (e.g., a PDA) other than the telephone.

## Claims

1. A liquid crystal display device (7) comprising:
a liquid crystal screen (71);
a backlight (73) that is arranged to apply light to the liquid crystal screen (71); and
a unit (75) arranged to increase the amount of light transmitted by the liquid crystal display device (7) by increasing a quantity of light coming from the backlight (73) and passing through the liquid crystal screen (71) **characterized in that** the unit (75) arranged to increase the amount of light transmitted by the liquid crystal display device (7) is adapted to increase a quantity of light coming from the backlight (73) and passing through the liquid crystal screen (71) from a quantity of light coming from the backlight (73) in a display mode, in which the light coming from the backlight (73) is used for display of an image, to a quantity of light coming from the backlight (73) in an illumination mode, in which the light coming from the backlight (73) and passing through the liquid crystal screen (71) is for use as illumination light for illuminating outside, a prescribed time after the time when a transition request for a transition from the display mode to the illumination mode is received by said unit (75) for increasing the amount of light transmitted by the liquid crystal display device (7) wherein the unit (75) arranged to increase the amount of light transmitted by the liquid crystal display device (7) is arranged to set an emission light quantity of the backlight (73) larger than that in the display mode, and
wherein the unit (75) arranged to increase the amount of light transmitted by the liquid crystal display device (7) is for setting contrast of the liquid crystal screen (71) in the illumination mode lower than that in the display mode.

2. The liquid crystal display device (7) according to claim 1, the unit (75) arranged to increase the amount of light transmitted by the liquid crystal device (7) is for erasing the image displayed on the liquid crystal screen on receipt of said transition request.

3. The liquid crystal display device (7) according to claim 1, further comprising a contrast setting unit (72) that is arranged to set contrast of the liquid crystal screen (71) in the display mode in a specified range specified in advance;
wherein the unit (75) arranged to increase the amount of light transmitted by the liquid crystal display device (7) is for setting the contrast of the liquid crystal screen (71) lower than a lower limit of the specified range.

4. The liquid crystal display device (7) according to any preceding claim, further comprising a first cancelling unit that is arranged to cancel operation of the unit (75) arranged to increase the amount of light transmitted by the liquid crystal display device (7).

5. The liquid crystal display device (7) according to any preceding claim, further comprising a second cancelling unit that is arranged to cancel operation of the unit (75) arranged to increase the amount of light transmitted by the liquid crystal display device (7) when a prescribed time has elapsed from a start of the operation of the unit (75) arranged to increase the amount of light transmitted by the liquid crystal display device (7).

6. The liquid crystal display device according to any preceding claim, further comprising a lighting prohibiting unit that is arranged to prohibit lighting of the backlight (73) when an output voltage of a battery (11) is lower than a specified voltage specified in advance in a state the liquid crystal display device (7) uses the battery (11) as a power source.

7. The liquid crystal display device (7) according to any one of claims 1-6, wherein the unit is arranged to set a voltage which is applied to each pixel electrode and the voltage is smaller in the illumination mode than in the display mode so that the polarization angle is set in such a direction as to transmit a larger part of light coming from the backlight, thereby lowering the contrast.

8. An electronic apparatus comprising:
a liquid crystal display device (7) according to any preceding claim, wherein the electronic apparatus is portable.

9. The electronic apparatus according to claim 8, wherein the electronic apparatus comprises a telephone; and
the telephone comprises an operation prohibiting unit arranged to prohibit operation of the unit (75) arranged to increase the amount of light transmitted by the liquid crystal display device (7) at least during a call.

## Patentansprüche

1. Flüssigkristallanzeigevorrichtung (7) mit:
einem Flüssigkristallschirm (71);
einem Hinterlicht (73), das dazu eingerichtet ist, Licht auf den Flüssigkristallschirm (71) aufzubringen; und
einer Einheit (75), die dazu eingerichtet ist, die durch die Flüssigkristallanzeigevorrichtung (7) übertragene Lichtmenge zu vermehren, indem eine Größe des Lichts erhöht wird, das von dem Hinterlicht (73) kommt und durch den Flüssigkristallschirm (71) hindurch tritt,
**dadurch gekennzeichnet, dass**
die Einheit (75), die zum Vermehren der durch die Flüssigkristallanzeigevorrichtung (7) übertragenen Lichtmenge eingerichtet ist, dazu eingerichtet ist, eine Größe des Lichts zu erhöhen, das von dem Hinterlicht (73) kommt und durch den Flüssigkristallschirm (71) hindurch tritt, und zwar von einer Größe des Lichts, das von dem Hinterlicht (73) in einem Anzeigemodus kommt, bei dem das von dem Hinterlicht (73) kommende Licht zum Anzeigen eines Bildes verwendet wird, zu einer Größe des Lichts, das von dem Hinterlicht (73) in einem Beleuchtungsmodus kommt, bei dem das von dem Hinterlicht (73) kommende und durch den Flüssigkristallschirm (71) hindurch tretende Licht als Beleuchtungslicht zum Beleuchten einer Außenseite zu verwenden ist, in einer vorgeschriebenen Zeit nach dem Zeitpunkt, bei dem eine Übergangsanfrage von einem Übergang von dem Anzeigemodus zu dem Beleuchtungsmodus durch die Einheit (75) zum Vermehren der durch die Flüssigkristallanzeigevorrichtung (7) übertragenen Lichtmenge aufgenommen wird, wobei die Einheit (75), die zum Vermehren der durch die Flüssigkristallanzeigevorrichtung (7) übertragenen Lichtmenge eingerichtet ist, dazu eingerichtet ist, eine Emissionslichtmenge des Hinterlichts (73) größer einzustellen als jene in dem Anzeigemodus, und
wobei die Einheit (75), die zum Vermehren der durch die Flüssigkristallanzeigevorrichtung (7) übertragenen Lichtmenge eingerichtet ist, einen Kontrast des Flüssigkristallschirms (71) in dem Beleuchtungsmodus kleiner festlegt als jenen in dem Anzeigemodus.

2. Flüssigkristallanzeigevorrichtung (7) gemäß Anspruch 1, wobei die Einheit (75), die zum Vermehren der durch die Flüssigkristallvorrichtung (7) übertragenen Lichtmenge eingerichtet ist, das an dem Flüssigkristallschirm angezeigte Bild beim Aufnehmen der Übergangsanfrage löscht.

3. Flüssigkristallanzeigevorrichtung (7) gemäß Anspruch 1, des Weiteren mit einer Kontrastfestlegungseinheit (72), die dazu eingerichtet ist, einen Kontrast des Flüssigkristallschirms (71) in dem Anzeigemodus in einem spezifischen Bereich festzulegen, der im voraus spezifiziert wurde;
wobei die Einheit (75), die zum Vermehren der durch die Flüssigkristallanzeigevorrichtung (7) übertragenen Lichtmenge eingerichtet ist, den Kontrast des Flüssigkristallschirms (71) kleiner festlegt als eine untere Grenze des spezifischen Bereiches.

4. Flüssigkristallanzeigevorrichtung (7) gemäß einem der vorherigen Ansprüche, des Weiteren mit einer ersten Beendigungseinheit, die dazu eingerichtet ist, einen Betrieb der Einheit (75) zu beenden, die zum Vermehren der durch die Flüssigkristallanzeigevorrichtung (7) übertragenen Lichtmenge eingerichtet ist.

5. Flüssigkristallanzeigevorrichtung (7) gemäß einem der vorherigen Ansprüche, des Weiteren mit einer zweiten Beendigungseinheit, die dazu eingerichtet ist, einen Betrieb der Einheit (75) zu beenden, die zum Vermehren der durch die Flüssigkristallanzeigevorrichtung (7) übertragenen Lichtmenge eingerichtet ist, wenn eine vorgeschriebene Zeit nach einem Start des Betriebs der Einheit (75) verstrichen ist, die zum Vermehren der durch die Flüssigkristallanzeigevorrichtung (7) übertragenen Lichtmenge eingerichtet ist.

6. Flüssigkristallanzeigevorrichtung gemäß einem der vorherigen Ansprüche, des Weiteren mit einer Leuchtunterbindungseinheit, die dazu eingerichtet ist, ein Leuchten des Hinterlichts (73) zu unterbinden, wenn in einem Zustand, bei dem die Flüssigkristallanzeigevorrichtung (7) eine Batterie (11) als eine Stromquelle nutzt, eine abgegebene elektrische Spannung der Batterie (11) kleiner ist als eine spezifische elektrische Spannung, die im Voraus spezifiziert wurde.

7. Flüssigkristallanzeigevorrichtung (7) gemäß einem der Ansprüche 1 bis 6, wobei die Einheit dazu eingerichtet ist, eine elektrische Spannung festzulegen, die auf jede Pixelelektrode aufgebracht wird, und die elektrische Spannung in dem Beleuchtungsmodus kleiner ist als in dem Anzeigemodus, so dass der Polarisationswinkel in einer derartigen Richtung festgelegt wird, dass ein größerer Teil des von dem Hinterlicht kommenden Lichtes übertragen wird, wodurch der Kontrast abgesenkt wird.

8. Elektronisches Gerät mit:
einer Flüssigkristallanzeigevorrichtung (7) gemäß einem der vorherigen Ansprüche, wobei das elektronische Gerät portabel ist.

9. Elektronisches Gerät gemäß Anspruch 8, wobei das elektronische Gerät ein Telefon aufweist; und
wobei das Telefon eine Betriebsunterbindungseinheit aufweist, die dazu eingerichtet ist, einen Betrieb der Einheit (75), die zum Vermehren der durch die Flüssigkristallanzeigevorrichtung (7) übertragenen Lichtmenge eingerichtet ist, zumindest während eines Anrufs zu unterbinden.

## Revendications

1. Dispositif d'affichage à cristaux liquides (7) comprenant :
un écran à cristaux liquides (71) ;
un rétroéclairage (73) qui est agencé pour appliquer une lumière à l'écran à cristaux liquides (71) ; et
une unité (75) agencée pour augmenter la quantité de lumière transmise par le dispositif d'affichage à cristaux liquides (7) en augmentant une quantité de lumière provenant du rétroéclairage (73) et passant à travers l'écran à cristaux liquides (71), **caractérisé en ce que** l'unité (75) agencée pour augmenter la quantité de lumière transmise par le dispositif d'affichage à cristaux liquides (7) est conçue pour augmenter une quantité de lumière provenant du rétroéclairage (73) et passant à travers l'écran à cristaux liquides (71) d'une quantité de lumière provenant du rétroéclairage (73) dans un mode d'affichage, dans lequel la lumière provenant du rétroéclairage (73) est utilisée pour afficher une image, à une quantité de lumière provenant du rétroéclairage (73) dans un mode d'éclairage, dans lequel la lumière provenant du rétroéclairage (73) et passant à travers l'écran à cristaux liquides (71) est destinée à une utilisation en tant que lumière d'éclairage pour éclairer l'extérieur, un temps prescrit après l'instant auquel une demande de transition pour une transition du mode d'affichage dans le mode d'éclairage est reçue par ladite unité (75) pour augmenter la quantité de lumière transmise par le dispositif d'affichage à cristaux liquides (7), dans lequel l'unité (75) agencée pour augmenter la quantité de lumière transmise par le dispositif d'affichage à cristaux liquides (7) est agencée pour fixer une quantité de lumière d'émission du rétroéclairage (73) à une valeur supérieure à celle dans le mode d'affichage, et
dans lequel l'unité (75) agencée pour augmenter la quantité de lumière transmise par le dispositif d'affichage à cristaux liquides (7) sert à fixer un contraste de l'écran à cristaux liquides (71) dans le mode d'éclairage à une valeur inférieure à celle dans le mode d'affichage.

2. Dispositif d'affichage à cristaux liquides (7) selon la revendication 1, dans lequel l'unité (75) agencée pour augmenter la quantité de lumière transmise par le dispositif à cristaux liquides (7) sert à effacer l'image affichée sur l'écran à cristaux liquides lors de la réception de ladite demande de transition.

3. Dispositif d'affichage à cristaux liquides (7) selon la revendication 1, comprenant en outre une unité de réglage de contraste (72) qui est agencée pour fixer un contraste de l'écran à cristaux liquides (71) dans le mode d'affichage dans une plage spécifiée qui est spécifiée à l'avance ;
dans lequel l'unité (75) agencée pour augmenter la quantité de lumière transmise par le dispositif d'affichage à cristaux liquides (7) sert à fixer le contraste de l'écran à cristaux liquides (71) à une valeur inférieure à une limite inférieure de la plage spécifiée.

4. Dispositif d'affichage à cristaux liquides (7) selon l'une quelconque des revendications précédentes, comprenant en outre une première unité d'annulation qui est agencée pour annuler une opération de l'unité (75) agencée pour augmenter la quantité de lumière transmise par le dispositif d'affichage à cristaux liquides (7).

5. Dispositif d'affichage à cristaux liquides (7) selon l'une quelconque des revendications précédentes, comprenant en outre une deuxième unité d'annulation qui est agencée pour annuler une opération de l'unité (75) agencée pour augmenter la quantité de lumière transmise par le dispositif d'affichage à cristaux liquides (7) lorsqu'un temps prescrit s'est écoulé depuis un début de l'opération de l'unité (75) agencée pour augmenter la quantité de lumière transmise par le dispositif d'affichage à cristaux liquides (7).

6. Dispositif d'affichage à cristaux liquides selon l'une quelconque des revendications précédentes, comprenant en outre une unité d'interdiction d'éclairage qui est agencée pour interdire l'éclairage du rétroéclairage (73) lorsqu'une tension de sortie d'une batterie (11) est inférieure à une tension spécifiée qui est spécifiée à l'avance dans un état où le dispositif d'affichage à cristaux liquides (7) utilise la batterie (11) en tant que source de puissance.

7. Dispositif d'affichage à cristaux liquides (7) selon l'une quelconque des revendications 1 à 6, dans lequel l'unité est agencée pour fixer une tension qui est appliquée à chaque électrode de pixel et la tension est plus faible dans le mode d'éclairage que dans le mode d'affichage de sorte que l'angle de polarisation est fixé dans une direction telle qu'une plus grande partie de la lumière provenant du rétroéclairage est transmise, diminuant de ce fait le contraste.

8. Appareil électronique comprenant :
un dispositif d'affichage à cristaux liquides (7) selon l'une quelconque des revendications précédentes, dans lequel l'appareil électronique est portable.

9. Appareil électronique selon la revendication 8, dans lequel l'appareil électronique comprend un téléphone ; et
le téléphone comprend une unité d'interdiction d'opération agencée pour interdire une opération de l'unité (75) agencée pour augmenter la quantité de lumière transmise par le dispositif d'affichage à cristaux liquides (7) au moins pendant un appel.
